# EUROPÄISCHE PATENTANMELDUNG

(11) **EP 0 652 167 A1**
(43) Veröffentlichungstag der Anmeldung: **10.05.1995**
(21) Anmeldenummer: 94117527.5
(22) Anmeldetag: 07.11.1994
(51) Int. Cl.: B65G 1/04

(54) **Anlage zum Zwischenlagern und Kommissionieren von stapelfähigem Fördergut**

(30) Priorität: 08.11.1993 DE 4338108
(71) Anmelder: SIEMENS AKTIENGESELLSCHAFT, D-80333 München (DE)
(72) Erfinder: Ketzer, Georg, Dipl.-Ing., D-82008 Unterhaching (DE)

(57) **Zusammenfassung**

Eine aus einem Regalsystem (1), einem Handhabungssystem, einem ersten Fördersystem zur Zuführung von Fördergut und einem zweiten Fördersystem zum Sammeln bzw. Ausgeben von kommissionierten Aufträgen bestehende Anlage kann bei bestimmten Betriebszuständen ihre Kapazitätsgrenze erreichen. Der Ausfall des Handhabungssystemes führt zum Stillstand der gesamten Anlage. Es wird eine Kommissionieranlage beschrieben, in der in einem Regalsystem (1) in Regalfächern (7) Papierstapel zwischenlagerbar sind. Die Regalfächer (7) sind beidseitig zugänglich, so daß von der Frontseite und von der Rückseite des Regalsystemes (1) von jeweils mindestens einem Portalroboter (8, 9) ein- und ausgelagert werden kann. Ein Förderband (4) für die Zuführung von Papierstapeln wird durch das Regal hindurchgeführt und kann Papierstapel an bestimmten Referenzpositionen zur Übergabe an beide Portalroboter (8, 9) positionieren. Die Kommissionierung von auszugebenden, entsprechend einem Kundenwunsch zusammengestellten Aufträgen geschieht wahlfrei durch die Portalroboter (8, 9).

## Beschreibung

Die Erfindung betrifft eine Kommissionieranlage, in der stapelfähiges Fördergut, wie beispielsweise Papierstapel von einer Bearbeitungs- oder Produktionsmaschine angeliefert wird, in einem Regalsystem zwischengelagert wird und logistisch verwaltet wird, so daß bei der Ausgabe kommissionierte Ware, d.h. entsprechend einem vorliegenden Auftrag definiert zusammengestellte Ware, verfügbar ist.

Die der Produktion nachgeschaltete Kommissionierung von stark differenzierter stapelfähiger Ware wird teilweise noch manuell durchgeführt. Diese Kommissionierung sieht vor, daß ein getaktetes Förderband die nicht entsprechend einem Kundenauftrag sortierte Ware anliefert, diese einzelnen Produktionsaufträge nach Mailboxfächern sortiert, entsprechend eingelagert und daß ein Kunde die in einer Mailbox entsprechend einem bestimmten Auftrag enthaltene, aber noch nicht weiter differenzierte Ware entnimmt. Um aus dem Warenumfang innerhalb einer Mailbox Einzeladressen zu erfassen und zuzustellen, ist ein weiterer Sortiervorgang notwendig. Der Einsatz von automatischen Kommissionieranlagen bietet im Verhältnis dazu wesentlich kürzere Bearbeitungszeiten beim Sortieren, Einlagern, Auslagern und Kommissionieren. So wird beispielsweise von einem kontinuierlich laufenden Förderband die von einer Produktionseinrichtung angelieferte Ware von einem Sammelband übernommen, dort von einem Handhabungsgerät aufgenommen und zwischengelagert oder direkt ausgegeben. Dabei sind Einzeladressen nach wie vor in der anfangs vorliegenden Reihenfolge enthalten.

Eine automatische Kommissionieranlage für Papierstapel besteht beispielsweise aus einem Regalsystem zum Zwischenlagern von Druckaufträgen, die aus Papierstapeln bestehen. Von einer Produktionsmaschine, beispielsweise einer Druckmaschine, werden einzelne Papierstapel entsprechend einem Druckauftrag erstellt. Dieser Druckauftrag entspricht nicht einem Kundenauftrag, da die darin enthaltenen Einzeladressen zuerst umzusortieren sind. Über ein Fördersystem wird ein solcher bedruckter Papierstapel zu dem Regalsystem transportiert. Dort übernimmt ein Handhabungssystem, beispielsweise ein Portalroboter, den Papierstapel. Der Papierstapel wird in ein Regalfach eingeordnet und kann dort vorkommissioniert, d.h. mit folgenden oder vorausgehenden Papierstapeln kombiniert werden, oder bei der Auslagerung entsprechend einem Kundenwunsch auf ein Ausgabefördersystem gebracht werden. Eine solche automatische Kommissionieranlage ist in ihrer Verarbeitungskapazität relativ eingeschränkt, da sowohl Produktionsaufträge, als auch Kundenaufträge anstehen und zu bearbeiten sind. Der vorhandene Portalroboter kann sowohl bei einer Vielzahl von anstehenden einzulagernden Papierstapeln, als auch bei einer Vielzahl von anstehenden Kundenaufträgen ausgelastet sein. Somit ist die maximale Bearbeitungsgeschwindigkeit von Aufträgen festgelegt. Darüber hinaus bedeutet der Ausfall einer Komponente, beispielsweise der Ausfall des Portalroboters, daß die gesamte Anlage stillsteht.

Der Erfindung liegt die Aufgabe zugrunde, eine schnelle und betriebssichere automatische Kommissionieranlage zum Zwischenlagern und Kommissionieren von stapelfähigem Fördergut zur Verfügung zu stellen. Die Lösung dieser Aufgabe geschieht durch den Gegenstand des Anspruches 1.

Der Erfindung liegt die Erkenntnis zugrunde, daß eine Anlage zum Zwischenlagern und Kommissionieren von stapelfähigem Fördergut schnell und betriebssicher arbeitet, wenn:
- das Regalsystem beiderseits, d.h. nach vorne und nach hinten zugängliche Regalfächer aufweist,
- an der Front- und an der Rückseite durch jeweils mindestens ein Handhabungssystem bedient wird,
- ein erstes durch das Regalsystem hindurchgeführtes Fördersystem für die Zuführung von Fördergut aufweist und
- das auf der Rückseite befindliche Handhabungssystem ein Fördersystem zum Abtransport in Richtung einer Ausgabeeinheit bedient, wobei jedes Handhabungssystem, sowohl das auf der Frontseite, als auch das auf der Rückseite, ein- und auslagert, kommissioniert und auf das Fördersystem zugreifen kann, das Fördergut zuführt.

Die Durchführung des ersten Fördersystems durch das Regalsystem ermöglicht sehr kurze Verfahrwege des ersten Handhabungssystems beim Einlagern des Förderguts und damit insgesamt ein zeitoptimiertes Einlagern. Voraussetzung ist dabei lediglich, daß das erste Handhabungssystem das erste Fördersystem überfahren kann, was beispielsweise bei der Verwendung eines Portalroboters der Fall ist.

Vorteilhafte Ausgestaltungen der Erfindung sind in den Unteransprüchen angegeben.

Die Ausgestaltung nach Anspruch 2 besteht in der Anordnung einer Referenzposition, an der das zuführende Fördersystem einen Fördergutstapel positioniert, derart, daß jedes Handhabungssystem auf diese gleiche Position zugreifen kann. Diese Referenzposition liegt im Bereich der Durchführung des Fördersystems durch das Regalsystem.

Die Ausgestaltung nach Anspruch 3 ermöglicht durch die Durchführung des ersten Fördersystems durch den mittleren Bereich des Regalsystems eine weitere Verkürzung der Verfahrwege des ersten Handhabungssystems. Das Einlagern des Förderguts kann hier von der Mitte des Regalsystems ausgehen.

Im folgenden wird anhand der schematischen Figur ein Ausführungsbeispiel beschrieben.

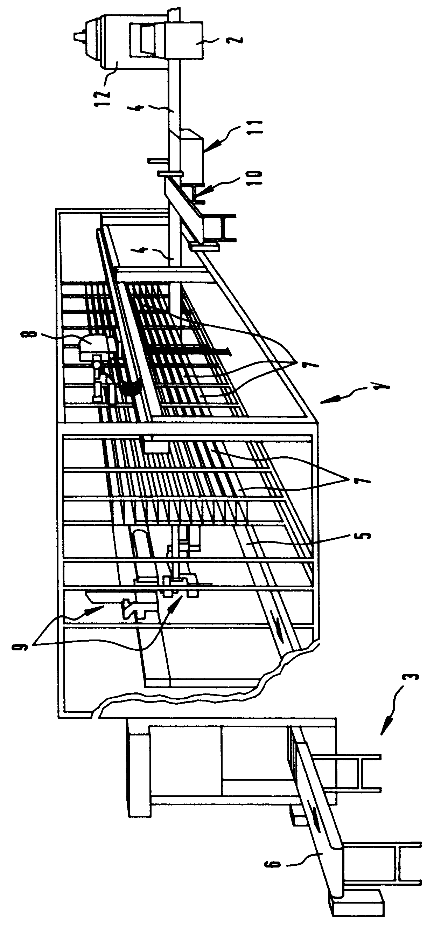

Die Figur zeigt ein Regalsystem 1 mit einer Vielzahl von neben- und übereinander angeordneten, beiderseits zugänglichen Regalfächern 7. Die in einer Bearbeitungs- oder Produktionsmaschine 12 hergestellten Papierstapel werden in einer Umsetzeinheit 2 auf ein Förderband 4 zum Antransport in Richtung auf das Regalsystem 1 plaziert. In einer Lese- und Höhenmeßstation 11 werden beispielsweise über Barcode warenspezifische Daten und die Höhe des Papierstapels registriert. bei einem Fehler im Gesamtsystem, beispielsweise bei der Identifizierung, bei Terminüberschreitungen oder anderen Randbedingungen, kann ein Papierstapel über das Ausschleusmodul 10 aus dem System genommen werden.

Die entsprechend einem Kundenwunsch zusammengestellten Aufträge werden an einer Ausgabeeinheit 3 ausgegeben. Diese verfügt ebenfalls über ein Förderband 6.

Im Regalsystem 1 arbeiten auf der Frontseite und auf der Rückseite der Regalfächer 7 ein erstes und als zweites Handhabungssystem, jeweils dargestellt durch mindestens einen ersten und einen zweiten Portalroboter 8,9. Das zweite Fördersystem auf der Rückseite des Regalsystemes 1 ist in Form eines Förderbandes 5 zum Abtransport von kommissionierter Ware realisiert.

Das von einer Produktionsmaschine 12 angelieferte gefaltete und/oder gestapelte Papier wird über das Förderband 4 gefördert, identifiziert und vermessen, eventuell manuell nachbearbeitet, vom ersten Portalroboter 8 aufgenommen, im Regalsystem 1 eingelagert und logistisch verwaltet, entsprechend einem Kundenwunsch an der Ausgabeeinheit durch einen der beiden Portalroboter 8,9 definiert ausgelagert und über die Förderbänder 5 und 6 ausgegeben. Der eigentliche Kommissioniervorgang geschieht bei der Handhabung der Papierstapel durch die Portalroboter 8,9, indem beispielsweise bereits vorliegende Kundenaufträge berücksichtigt werden, die zu einem bestimmten Zeitpunkt kommissioniert sein müssen. Eine Art Direktkommissionierung, d.h. der Transport vom Förderband 4 zur Ausgabeeinheit 6, ist ebenfalls möglich. Ein Kunde bzw. ein Abholer eines Auftrages erhält seine kommissionierte Ware in einer definierten Reihenfolge. Somit ist kein weiteres Sortieren nötig, da diese Reihenfolge vom Kommisionieren her bekannt ist.

Die wesentliche Beschleunigung des Systemes mit einer Möglichkeit der Zwischenlagerung wird durch den wahlfreien Zugriff der Portalroboter 8,9 auf einzelne, im Regalsystem 1 vorhandene Papierstapel erreicht. Durch diese Beschleunigung können Stillstandszeiten der Produktionsmaschinen 12 vermindert werden. Es sind insgesamt kürzere Laufzeiten im Kommissioniersystem erreichbar. Eine verbesserte Betriebssicherheit ergibt sich dadurch, daß beide Portalroboter 8,9 auf das Förderband 4 für den Antransport von Fördergut zugreifen können. Selbst bei dem Ausfall eines Portalroboters bleibt die Anlage betriebsfähig. Damit ist ein relativ aufsichtsarmer Dreischichtbetrieb (Dauerbetrieb) möglich. Für verschiedene Anwendungsfälle können kundenspezifische Lagerkapazitäten und Regalfachgrößen vorgesehen werden. Die Zwischenlagerung der Papierstapel kann chaotisch geschehen, nachdem die logistische Verwaltung, verbunden mit der Identifizierung eines jeden Papierstapels, den Lagerort registriert.

Die beiden Portalroboter 8, 9 sind autarke Kommissionierroboter. Die mittlere Zugriffszeit liegt bei ca. 9 s. Die beiden Robotersysteme sind gegenseitig redundant.

Insgesamt läßt sich somit eine platzoptimierte, vollautomatische Kommissionierung durchführen. Bei einem Stau in einem Fördersystem kann beispielsweise getaktet werden. Geteilte Kundenaufträge können lückenlos transportiert und zusammengestellt werden.

Mit einer beschriebenen Anlage können beispielsweise täglich 3000 bis 5000 Listen ausgegeben werden. Dabei liegen Papierstapel vor, die maximal 9x13" messen. Die Stapelhöhe geht von 4 Blatt bis zu maximal 180 mm Höhe.

Um die Servicefreundlichkeit der Anlage abzurunden, kann beispielsweise auch vorgesehen sein, daß ein Papierstapel zur manuellen Bearbeitung ausgegeben wird, das Fehldrucke ausgegeben werden, daß bereits bearbeitete Posten nochmals eingebracht werden, daß Papierstapel ohne Barcode eingebracht werden können oder daß die Identifikation eines Abholers abgefragt wird. Die gesamte Anlage kann somit auch datensicher betrieben werden. Durch entsprechende Rechnerunterstützung können Irrläufer oder Fehlkommissionierungen ausgeschlossen werden. Dies bedeutet, daß insgesamt beispielsweise ein Druckauftrag kostengünstig, in kurzer Zeit und mit hoher Sicherheit ausführbar ist.

## Patentansprüche

1. Anlage zum Zwischenlagern und Kommissionieren von stapelfähigem Fördergut, insbesondere von Papierstapeln, bestehend aus:
einem Regalsystem (1) mit einer Vielzahl von neben- und übereinander angeordneten, beiderseits zugänglichen Regalfächern (7),
mindestens einem ersten Handhabungssystem auf der Frontseite und mindestens einem zweiten Handhabungssystem auf der Rückseite des Regalsystemes (1) jeweils zum Ein- und Auslagern von Fördergut,
mindestens einem ersten Fördersystem zur Zuführung des Fördergutes auf der Frontseite des Regalsystemes (1), mit einer Durchführung dieses Fördersystemes durch das Regalsystem (1) in Richtung auf dessen Rückseite und mindestens einer Referenzposition für die Übergabe des Fördergutes an das erste oder das zweite Handhabungssystem,
einem zweiten Fördersystem auf der Rückseite des Regalsystemes (1) zum Transport des Fördergutes zu einer Ausgabeeinheit (3), wobei mittels des zweiten Handhabungssystemes zwischengelagertes Fördergut vom Regalsystem (1) oder Fördergut von der Referenzposition zum zweiten Fördersystem transportierbar ist oder Fördergut von der Referenzposition in das Regalsystem (1) einlagerbar ist.

2. Anlage nach Anspruch 1,
**gekennzeichnet durch** eine Referenzposition im Bereich der Durchführung durch das Regalsystem (1), so daß das erste Handhabungssystem oder das zweite Handhabungssystem auf die gleiche Referenzposition zugreifen.

3. Anlage nach Anspruch 1 oder 2,
**gekennzeichnet durch** eine im mittleren Bereich des Regalsystems (1) angeordnete Durchführung des ersten Fördersystems.
